Europäisches Patentamt

European Patent Office

Office européen des brevets

(11) Publication number: **0 508 763 B1**

(12) **EUROPEAN PATENT SPECIFICATION**

(45) Date of publication of patent specification: **14.12.94**

(51) Int. Cl.⁵: **D21H 27/00**, G03B 21/64, //D21H11/04,D21H13/06, D21H17/16,D21H17/17, D21H17/29,D21H17/67, D21H21/14

(21) Application number: **92303142.1**

(22) Date of filing: **09.04.92**

(54) Archival aperture card and composition thereof.

(30) Priority: **12.04.91 US 684607**
**13.03.92 US 851177**

(43) Date of publication of application:
**14.10.92 Bulletin 92/42**

(45) Publication of the grant of the patent:
**14.12.94 Bulletin 94/50**

(84) Designated Contracting States:
**DE FR GB IT**

(56) References cited:
**BE-A- 887 914**
**DE-A- 2 521 258**
**US-A- 4 884 885**

**ABSTRACT BULLETIN OF THE INSTITUTE OF PAPER CHEMISTRY. vol. 46, no. 10, April 1976, APPLETON US, p. 1047; IVANOV ET AL.: 'Development of a composition for letterpress paper with improved durability and printability.'**

(73) Proprietor: **MINNESOTA MINING AND MANUFACTURING COMPANY**
**3M Center,**
**P.O. Box 33427**
**St. Paul, Minnesota 55133-3427 (US)**

(72) Inventor: **Shaw, Jeffry S., c/o Minnesota Mining and**
**Manufact. Co.,**
**2501 Hudson Road,**
**P.O. Box 33427**
**St. Paul, Minnesota 55133-3427 (US)**
Inventor: **Kratzer, Al, c/o Minnesota Mining and**
**Manufact. Co.,**
**2501 Hudson Road,**
**P.O. Box 33427**
**St. Paul, Minnesota 55133-3427 (US)**

(74) Representative: **Baillie, Iain Cameron et al**
**c/o Ladas & Parry**
**Altheimer Eck 2**
**D-80331 München (DE)**

**Description**

## BACKGROUND OF THE INVENTION

The present invention relates generally to card stock for photosensitive film mounts. In particular, the present invention is an aperture card (ie., a paper card with an opening in which a frame of film is mounted) suitable for archival storage.

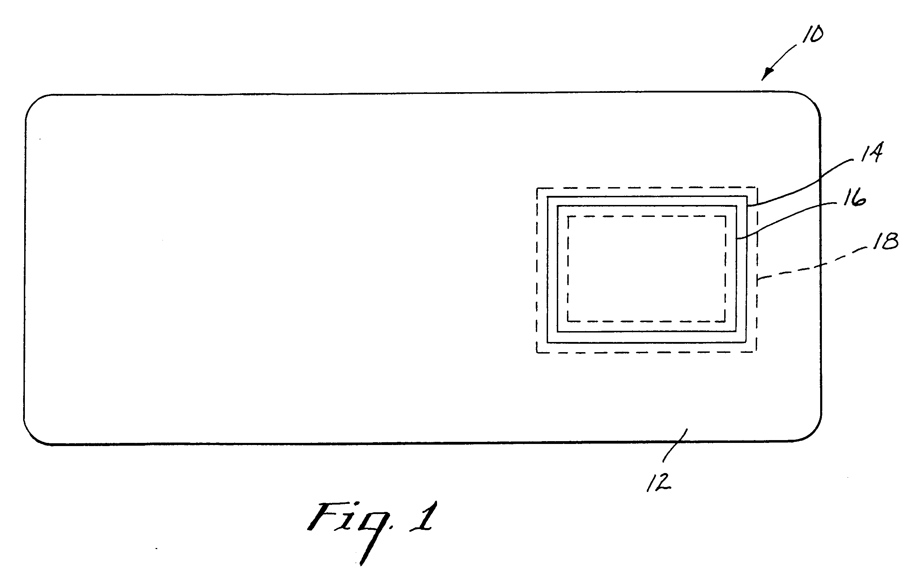

Aperture cards such as that shown in FIG. 1 are commonly used for the handling and storage of photosensitive film such as microfilm frames bearing images of engineering drawings or other information. Aperture cards are typically of standard data processing punch card size, and include an aperture or hole sized to receive the microfilm frame. Strips of adhesive tape or other fasteners are used to mount the microfilm frame within the aperture or otherwise to the card.

Cameras, plotters, printers, duplicators and other types of equipment are used to process the information stored on aperture cards. Mechanical handling mechanisms drive the aperture cards within this equipment. To ensure consistent and reliable operation of the handling mechanisms, the aperture cards are manufactured to relatively strict specifications such as ANSI specification X311-1969. By way of example, some of the specifications and properties of conventional aperture cards commercially available from 3M of St. Paul, Minnesota, U.S.A., the assignee of the present invention, are as follows:

| PROPERTY | LIMITS |
|---|---|
| Thickness | 0.018 ± 0.010 cm (0.007" ± 0.004) |
| Burst (Mullen) | 55 minimum |
| Stiffness (Taber V-5) | 17.0 minimum M.D.<br>8.0 minimum C.D. |
| Folding Endurance (MIT) | 100 minimum M.D.<br>100 minimum C.D. |
| Tearing Resistance (Elmendorf) | 125 minimum M.D.<br>125 minimum C.D. |
| Porosity (Gurley) | 35 minimum secs/100cc<br>200 maximum secs/100cc |
| Abrasion Loss (Taber) | Top and bottom 50 maximum mg. loss |
| Smoothness (Sheffield) | Top and bottom 125 maximum |
| Electrical resistance | 40 - 250 M ohms |
| Ash | 2.0% maximum |
| Coefficent of Friction | 0.30 minimum<br>0.45 maximum<br>Kinetic friction should not vary more than 25% from static friction |
| Moisture content | 4.5% minimum<br>6.5% maximum |
| Expansion (20%-75% RH) | 0.0467 cm (0.0184") maximum length<br>0.0579 cm (0.0228") maximum width |
| Contraction (75%-20% RH) | 0.0467 cm (0.0184") maximum length<br>0.0579 cm (0.0228") maximum width |

Card stock from which the aperture cards are cut is manufactured on conventional papermaking machinery using standard formulation and papermaking techniques. The bulk of the formulation is a slurry of bleached hardwood and softwood chemical pulp, generally in a 60/40 to 80/20 hardwood to softwood ratio. Alum (Aluminum Sulfate) is added to the slurry for pH control, retention of additives such as internal sizing agents, and formation improvement. Retention and formation aids such as polyacrylamides and cationic starches can also be used. The stock is typically surface sized with starch as it is being manufactured, a step which can also have an effect on the coefficent of friction.

Information which must be retained for long periods of time is often recorded on microfilm frames mounted to aperture cards. Aperture cards used with "archival" film, that which has characteristics suitable for the preservation of records having permanent value, must meet the photographic activity test and alkali reserve test of the American National Standards Institute (ANSI) standard IT9.2-1988. Unfortunately, commercially available aperture cards of the type discussed above are somewhat acidic (pH 4.5-6.0)

3

because of the Alum used in the stock formulation, and do not meet this standard. Although paper stock with an alkali reserve is commercially available, this alkaline stock does not meet the photographic activity test and does not have the physical properties and specifications required of aperture cards.

It is evident that there is a need for "archival" aperture cards. To be suitable for archival use, the card stock must meet ANSI standard IT9.2-1988 and have the properties required of conventional aperture cards. To be commercially viable, any such archival card stock should be capable of being manufactured using conventional papermaking machinery.

## SUMMARY OF THE INVENTION

The present invention is an archival photosensitive film mount stock according to claim 1 which can be used to manufacture aperture cards having the required properties of conventional cards and also meeting the photographic activity and alkali reserve tests of ANSI standard IT9.2-1988. Conventional papermaking machinery can be used to efficiently process this formulation into the stock. The pulp base of the stock formulation is a mixture of hardwood and softwood pulp containing at least 10% softwood pulp. Alkaline earth carbonate is added in an amount that results in stock with an alkaline reserve greater than a molar equivalent of about 2% calcium carbonate, and an ash content below about 2%. Other components are added in about the following amounts:

| internal sizing agent | 0.05-1.0%* |
| cationic starch | 0.1-1.5%* |
| surface sizing agent | 0.05-2.0%* |
| slip agent | 0.5-1.5%** |

\* percentage based on total pulp
\*\* percentage solids added to surface sizing agent

In one embodiment, about 2.2% calcium carbonate is used as the alkaline earth carbonate. About 0.15% alkenyl succinic anhydride is used as an internal sizing agent. About 0.7% cationic potato starch is used as an additive to the stock. About 1.0% of the starch is also used as the surface sizing agent. Alkyl ketene dimer is incorporated onto the surface sizing starch mixture at about 1.0% solids level for use as a slip agent. Dyed rayon fibers in the amount of about 0.01-0.3% on total pulp can be added to granitize the stock.

## BRIEF DESCRIPTION OF THE DRAWINGS

FIG. 1 is an illustration of an aperture card 10 which can be manufactured from the archival photosensitive film mount stock of the present invention. In the embodiment shown, aperture card 10 includes a card member 12 having an aperture 14 in which a frame of microfilm 16 is mounted by strips 18 of adhesive tape (shown in phantom).

## DETAILED DESCRIPTION OF THE PREFERRED EMBODIMENTS

The present invention is "archival" film mount stock, and aperture cards manufactured therefrom, which meet the photographic activity and alkali reserve tests of ANSI Standard IT9.2-1988. One such aperture card is shown in FIG. 1. The formulation from which this archival card stock is manufactured is specified generally in the following table:

## TABLE

| COMPONENT | AMOUNT | kg/metric ton (LBS/TON) PULP |
|---|---|---|
| Northern Softwood Kraft Pulp | 40-60% | |
| Northern Mixed Hardwood Pulp | 60 - 40% | |
| Alkaline Earth Carbonate | 1.5 - 2.5%* | 15-25(30 - 50) |
| Internal Sizing Agent | 0.1 - 0.2%* | 1-2(2 - 4) |
| Cationic Starch | 0.2 - 0.5%* | 2-5(4 - 10) |
| Surface Sizing Agent | 0.1 - 0.2%* | 1-2(2 - 4) |
| Slip Agent | 0.5 - 1.5%** | |
| Granitizing Fibers | 0.1 - 0.3%* | 1-2(2 - 4) |

*percentages based on total pulp

**percentage solids added to size press solution

The northern softwood kraft pulp is preferably a slow growth interior northern pulp which contains mostly white spruce and lodgepole pine. Smaller amounts of interior douglas fir and balsam fir can also be included in this mixture. A blend of this type gives a good balance of strength and surface properties.

Maple, birch, and beech are preferably the main components of the northern mixed hardwood pulp. Smaller amounts of ash, oak and aspen can also be added. This pulp imparts surface smoothness, stiffness and sheet uniformity.

The alkaline earth carbonate is preferably calcium carbonate ($CaCO_3$), and is retained in the paper stock. This component gives the paper an "alkaline reserve" to limit destructive chemical reactions with cellulose that age papers made with acidic chemicals such as alum. The carbonate also acts as a buffer in the system. The amount added is a balance between that required to obtain sufficient alkaline reserve, while keeping the ash content of the stock within the desired range.

Alkenyl succinic anhydride (ASA) is used as an internal sizing agent to impart liquid water resistance throughout the stock. It is the preferred reactive-sizing because of its reliability. Cationic starch (preferably potato) helps retain the anionic calcium carbonate and the ASA sizing in the stock and improves bonding of the pulp fibers. Cationic potato starch is also used as a surface sizing agent, and imparts some additional water resistance on the surface of the stock while improving surface strength (no fiber picking) and printing quality (no feathering).

A controlled amount of alkyl ketene dimer (AKD) is used as a slip agent to achieve the surface coefficient of friction. This chemical is incorporated into the surface sizing mixture in a size press at about 1.0% solids level. The actual amount is determined by the resulting coefficient of friction and adjusted accordingly.

Fibers such as dyed rayon fibers can be added to the formulation to granitize the paper. The amount of granitizing fibers added is determined by the desired visual appearance of the stock. Dyes can also be added as desired to alter the color of the stock.

The formulation described above can be processed on conventional papermaking machinery using standard stock preparation and papermaking techniques. The hardwood and softwood pulps are blended together with the granitizing fibers and slurried until dispersed. Alkaline earth carbonate is added to the slurry during the mixing process. The components in the slurry are then refined to prepare the fibers for papermaking. To balance the strength and dimensional stability requirements for aperture card stock, the pulp mixture is lightly refined (prior to sheet formation) to a level between 480 and 600 CSF(Canadian Standard Freeness), and preferably to a level around 540 CSF. Refining to a greater extent (lower freeness) improves strength properties such as burst, tensile and fold, as well as surface smoothness. However, this greater refining has a negative effect on the dimensional stability because the refining increases the bonding level of the network causing the resulting card to react more dramatically to moisture changes. Decreasing the level of refining results in a sheet with better dimensional stability but less overall strength.

The internal sizing agent and cationic starch are blended into the pulp just prior to sheet formation. In one embodiment, the sheet is formed on a fourdrinier machine using a dandy roll to improve overall formation. However, other types and configurations of papermaking machinery could be used as well. As the sheet is being dried, the surface sizing agent is combined with the slip agent and added at the size press in a conventional manner. The sheet is calendered to the proper thickness and surface finish.

One formulation of commercially available components is given below. Tests performed on these components, both singularly and in combination before and after sheet formation, have shown that the resulting aperture card stock has the archival characteristics required by ANSI Standard IT9.2 - 1988, as well as other properties of conventional aperture cards.

| COMPONENT | MANUFACTURER | AMOUNT | kg/metric ton (LBS#/TON) |
|---|---|---|---|
| PRINCE GEORGE softwood pulp | Canfor | 50% | |
| BURGESS hardwood pulp | James River | 50% | |
| VICRON 15-15 size alkaline earth carbonate | Pfizer | 2.2%* | 22 (44) |
| NALCO NALSIZE 7540 internal sizing agent | Nalco | 0.15%* | 1.5 (3) |
| SOLVITOSE N cationic starch | Avebe | 0.3%* | 3 (6) |
| SOLVITOSE N cationic starch surface sizing agent | Avebe | 0.15%* | 1.5 (3) |
| AQUAPEL L-360XC slip agent | Hercules | 1.0%** | |
| VERTIPILE dyed rayon fibers | James River-Curtis Division | 0.125%* | 1.125 (2.25) |

&ast; percentages based on total pulp
&ast;&ast; percentage solids added to size press solution

In another embodiment, the formulation from which the archival card stock is manufactured includes a hardwood and softwood pulp mixture containing at least 10% softwood pulp. A pulp base containing any less softwood pulp would likely exhibit lower strength properties. Beyond this criterion, the relative amounts of hardwood and softwood pulp can be optimized, depending on the characteristics of the particular varieties selected, to achieve the desired balance of strength and surface properties.

The amount of alkaline earth carbonate (e.g., the Vicron 15-15 calcium carbonate) should be capable of imparting an alkaline reserve of greater than a molar equivalent of about 2% calcium carbonate. However, the amount of calcium carbonate added for this purpose should produce finished stock having an ash content within desired specifications (e.g., a maximum of 2.0%). Calcium carbonate in an amount of about 1.0% to 2.5% (about 2.2% in one embodiment) on total pulp will generally meet these requirements.

The amount of internal sizing agent included in the formulation (e.g., Nalco Nalsize 7540 alkenyl succinic anhydride) is between about 0.05 and 1.00% (about 0.15% in one embodiment) on total pulp. The amount of cationic starch included in the formulation (e.g., Avebe Solvitose N cationic potato starch) is between about 0.1 and 1.5% (about 0.7% in one embodiment) on total pulp. The amount of surface sizing agent included in the formulation (e.g., Avebe Solvitose N cationic starch) is between about 0.05 and 2.00%

7

on total pulp, depending on the amount of internal sizing agent added. Generally, the more internal sizing agent that is added to the formulation, the less surface sizing agent that will be needed to obtain the desired properties (e.g., to limit feathering and fiber picking). About 1.0% surface sizing agent should provide desired results. The formulation for this embodiment also includes slip agent, in the amount of about 0.5 to 1.5% (about 1.0% in one embodiment) solids added to the surface sizing agent. Granitizing fibers in an amount of about 0.01 to 0.30% on total pulp will provide an appropriate appearance to the finished stock.

The ratio of softwood to hardwood can be varied depending upon the characteristics of the types of pulp used.

**Claims**

1. Archival film mount card stock manufactured from a formulation including:
   a mixture of hardwood pulp and softwood pulp containing at least 10% softwood pulp;
   an amount of alkaline earth carbonate which provides the stock with an alkaline reserve greater than a molar equivalent of about 2% calcium carbonate, and an ash content below about 2%;
   between about 0.05 and 1.00% on total pulp, internal sizing agent;
   between about 0.1 and 1.5% on total pulp, cationic starch;
   between about 0.05 and 2.00% on total pulp, surface sizing agent; and
   between about 0.5 and 1.5% solids added to the surface sizing agent, slip agent.

2. The film mount stock of claim 1 wherein the softwood pulp in the formulation includes about 50% softwood kraft pulp.

3. The film mount stock of claim 1 wherein the hardwood pulp in the formulation includes about 50% mixed hardwood pulp.

4. The film mount stock of claim 1 wherein the alkaline earth carbonate in the formulation includes calcium carbonate.

5. The film mount stock of claim 4 wherein the alkaline earth carbonate in the formulation includes about 2% , on total pulp, fine-ground calcium carbonate.

6. The film mount stock of claim 1 wherein the internal sizing agent includes alkenyl succinic anhydride.

7. The film mount stock of claim 6 wherein the internal sizing agent in the formulation includes about 0.15% alkenyl succinic anhydride

8. The film mount stock of claim 1 wherein the cationic starch in the formulation includes cationic potato starch.

9. The film mount stock of claim 8 wherein the cationic starch in the formulation includes about 0.7% cationic potato starch.

10. The film mount stock of claim 1 wherein the surface sizing agent in the formulation includes cationic potato starch.

11. The film mount stock of claim 10 wherein the surface sizing agent in the formulation includes about 1.0% cationic potato starch.

12. The film mount stock of claim 1 wherein the slip agent in the formulation includes alkyl ketene dimer.

13. The film mount stock of claim 12 wherein the slip agent in the formulation includes about 1.0% solids level alkyl ketene dimer in the surface sizing agent.

14. The film mount stock of claim 1 where in the alkaline earch carbonate in the formulation includes between about 1.0 and 2.5% alkaline earth carbonate on total pulp.

**15.** Aperture cards (10) from stock manufactured in accordance with claim 1,

**Patentansprüche**

**1.** Kartenmaterial zum archivierenden Rahmen von Film, das aus einem Ansatz hergestellt ist, der

ein mindestens 10% Weichholz-Zellstoff enthaltendes Gemisch von Hartholz-Zellstoff und Weichholz-Zellstoff;

Erdalkalicarbonat in einer solchen Menge, daß das Material eine Alkalireserve von mehr als einem Moläquivalent von etwa 2% Calciumcarbonat und einen Aschegehalt unter etwa 2% besitzt;

ein Innenleimungsmittel in einer auf die Gesamtzellstoffmenge bezogenen Menge zwischen etwa 0,005 und 1,00%;

kationische Stärke in einer auf die Gesamtzellstoffmenge bezogenen Menge zwischen 0,1 und 1,5%;

ein Oberflächenleimungsmittel in einer auf die Gesamtzellstoffmenge bezogenen Menge zwischen etwa 0,05 und 2,00%; und

ein Gleitmittel in Form von in einer Menge von etwa 0,5 bis 1,5% dem Oberflächcenleimungsmittel zugesetztem Feststoff

enthält.

**2.** Filmrahmungsmaterial nach Anspruch 1, in dem der Weichholz-Zellstoff in dem Ansatz zu etwa 50% aus Weichholz-Kraftzellstoff besteht.

**3.** Filmrahmungsmaterial nach Anspruch 1, in dem der Hartholz-Zellstoff in dem Ansatz zu etwa 50% aus Mischhartholz-Zellstoff besteht.

**4.** Filmrahmungsmaterial nach Anspruch 1, in dem das Erdalkalicarbonat in dem Ansatz wenigstens teilweise aus Calciumcarbonat besteht.

**5.** Filmrahmungsmaterial nach Anspruch 4, in dem das Erdalkalicarbonat in dem feingemahlenes Calciumcarbonat in einer auf die Gesamtzellstoffmenge bezogenen Menge von etwa 2% enthält.

**6.** Filmrahmungsmaterial nach Anspruch 1, in dem das Innenleimungsmittel wenigstens teilweise aus Alkenylbernsteinsäureanhydrid besteht.

**7.** Filmrahmungsmaterial nach Anspruch 6, in dem das Innenleimungsmittel in dem Ansatz etwa 0,15% Alkenlybernsteinsäureanhydrid enthält.

**8.** Filmrahmungsmaterial nach Anspruch 1, in dem die kationische Stärke in dem Ansatz wenigstens teilweise aus kationischer Kartoffelstärke besteht.

**9.** Filmrahmungsmaterial nach Anspruch 8, in dem die kationische Stärke in dem Ansatz etwa 0,7% kationische Kartoffelstärke enthält.

**10.** Filmrahmungsmaterial nach Anspruch 1, in dem das Oberflächenleimungsmittel in dem Ansatz wenigstens teilweise aus kationischer Kartoffelstärke besteht.

**11.** Filmrahmungsmaterial nach Anspruch 10, in dem das Oberflächenleimungsmittel in dem Ansatz etwa 1,0% kationische Kartoffelstärke enthält.

**12.** Filmrahmungsmaterial nach Anspruch 1, in dem das Gleitmittel in dem Ansatz wenigstens teilweise aus Alkylketendimer besteht.

**13.** Filmrahmungsmaterial nach Anspruch 12, in dem das Gleitmittel in dem Ansatz etwa 1,0% Alkylketendimer als Feststoff in dem Oberflächenleimungsmittel enthält.

**14.** Filmrahmungsmaterial nach Anspruch 1, in dem das Erdalkalicarbonat in dem Ansatz Erdalkalicarbonat in einer auf die Gesamtzellstoffmenge bezogenen Menge von etwa 1,0 bis 2,5% enthält.

**15.** Lochkarte (10) aus nach Anspruch 1 hergestelltem Material.

**Revendications**

**1.** Pâte à papier pour carte destinée au montage de pellicules d'archivage fabriquée à partir d'une formulation contenant :
   un mélange de pâte de feuillus et de pâte de résineux contenant au moins 10 % de pâte de résineux ;
   une quantité de carbonate de métal alcalino-terreux qui confère à la pâte à papier une réserve alcaline supérieure à un équivalent molaire d'environ 2 % de carbonate de calcium, et une teneur en cendres inférieure à environ 2 % ;
   de l'agent de collage interne, entre environ 0,05 et 1,00 % de la pâte totale ;
   de l'amidon cationique, entre environ 0,1 et 1, 5 % sur la pâte totale ;
   de l'agent d'encollage en surface, entre environ 0,05 et 2,00 % de la pâte totale ; et
   de l'agent de glissement, entre environ 0,5 et 1,5 % de solides ajoutés à l'agent d'encollage en surface.

**2.** Pâte à papier destinée au montage de pellicules selon la revendication 1, dans laquelle la pâte de résineux dans la formulation contient environ 50 % de pâte de kraft de résineux.

**3.** Pâte à papier destinée au montage de pellicules selon la revendication 1, dans laquelle la pâte de feuillus dans la formulation contient environ 50 % de pâte de feuillus mélangés.

**4.** Pâte à papier destinée au montage de pellicules selon la revendication 1, dans laquelle le carbonate de métal alcalino-terreux dans la formulation contient du carbonate de calcium.

**5.** Pâte à papier destinée au montage de pellicules selon la revendication 4, dans laquelle le carbonate de métal alcalino-terreux dans la formulation contient environ 2 %, sur la pâte totale, de carbonate de calcium finement broyé.

**6.** Pâte à papier destinée au montage de pellicules selon la revendication 1, dans laquelle l'agent de collage interne contient de l'anhydride alkényl-succinique.

**7.** Pâte à papier destinée au montage de pellicules selon la revendication 6, dans laquelle l'agent de collage interne dans la formulation contient environ 0,15 % d'anhydride alkényl-succinique.

**8.** Pâte à papier destinée au montage de pellicules selon la revendication 1, dans laquelle l'amidon cationique dans la formulation contient de l'amidon cationique de pomme de terre.

**9.** Pâte à papier destinée au montage de pellicules selon la revendication 8, dans laquelle l'amidon cationique dans la formulation contient environ 0,7 % d'amidon cationique de pomme de terre.

**10.** Pâte à papier destinée au montage de pellicules selon la revendication 1, dans laquelle l'agent d'encollage en surface dans la formulation contient de l'amidon cationique de pomme de terre.

**11.** Pâte à papier destinée au montage de pellicules selon la revendication 10, dans laquelle l'agent d'encollage en surface dans la formulation contient environ 1,0 % d'amidon cationique de pomme de terre.

**12.** Pâte à papier destinée au montage de pellicules selon la revendication 1, dans laquelle l'agent de glissement dans la formulation contient de l'alkyl cétène dimère.

**13.** Pâte à papier destinée au montage de pellicules selon la revendication 12, dans laquelle l'agent de glissement dans la formulation contient un niveau de solide d'environ 1,0 % d'alkyl cétène dimère dans l'agent d'encollage en surface.

**14.** Pâte à papier destinée au montage de pellicules selon la revendication 1, dans laquelle le carbonate de métal alcalino-terreux dans la formulation contient entre environ 1,0 et 2,5 % de carbonate de métal

EP 0 508 763 B1

alcalino-terreux sur la pâte totale.

**15.** Cartes à fenêtre (10) issues de la pâte à papier selon la revendication 1.

Fig. 1